Europäisches Patentamt

European Patent Office

Office européen des brevets

(19)

(11) Publication number: **0 287 704 B1**

# EUROPEAN PATENT SPECIFICATION

(45) Date of publication of patent specification: 22.05.91   (51) Int. Cl.⁵: **A01F 15/00**

(21) Application number: 87113076.1

(22) Date of filing: 08.09.87

(54) Baling machine.

(30) Priority: 02.03.87 GB 8704845

(43) Date of publication of application:
26.10.88 Bulletin 88/43

(45) Publication of the grant of the patent:
22.05.91 Bulletin 91/21

(84) Designated Contracting States:
DE ES FR GB IT NL

(56) References cited:
EP-A- 0 095 690
CH-A- 272 046
DE-B- 1 056 049
US-A- 2 628 709

(73) Proprietor: DEERE & COMPANY
1 John Deere Road
Moline, Illinois 61265(US)

(72) Inventor: Viaud, Jean
6, Rue de L'école
F-57200 Sarreguemines(FR)

(74) Representative: Feldmann, Bernhard
DEERE & COMPANY European Office Patent
Department Steubenstrasse 36-42
W-6800 Mannheim 1(DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### Baling Machine

This invention relates to a baling machine for forming cylindrical bales of crop having: movable belts arranged side-by-side across the machine to define a baling chamber; and drivable rolls over which the belts are trained, and a plurality of side-by-side elastomeric collars is disposed on a said roll or rolls, the collars are in contact with the respective belts.

Machines, towed by a tractor, for forming large cylindrical bales of hay (so called "round" balers) are well known. As the machine advances, the crop is removed from a windrow by a pick-up mechanism and delivered rearwardly to a baling chamber where it is rolled into a bale between sets of oppositely moving belts, the growing bale rotating about a horizontal axis and the baling chamber expanding with the bale. The belts are trained over driven rolls which extend laterally of the machine.

EP-A-95690 discloses the provision of rubber collars on rolls of a round baler to stop the build-up of crop which would cause clogging between the rolls and belts which are entrained round them. The collars have a smooth surface.

US-A-2,628,709 is concerned with avoiding build-up of solid material, i.e. sticky dirt and frozen moisture, between a pulley and conveyor, wherein the pulley is covered with a soft moulded rubber having a plurality of grooves therein.

Particularly in wet conditions, slippage can occur between the belts and rolls due to the build-up in this region of liquid consisting of "juice" from the crop and water, and the present invention reduces this problem.

According to the present invention the collars have continuous grooves therein which are in the form of rings and which converge toward their bases, there being 10 to 200 grooves per 100 mm length of collar.

Desirably there are 50 to 100 grooves per 100 mm length of collar.

Preferably the depth of the grooves is within the range 0.5 mm to 5 mm.

It is desirable that the pitch to depth ratio of the grooves is less than 20, and desirably 2 to 10.

The grooves serve as relief passages enabling the liquid to escape thereby reducing slippage which might otherwise occur.

Embodiments of the invention will now be described with reference to the accompanying diagrammatic drawings in which:

Fig. 1    is an elevational view from the right of a baling machine with the right hand side of the machine removed to show the disposition of transverse rolls over which belts defining a baling chamber are trained;

Fig. 2    is an elevational view of a roll of Fig. 1;

Fig. 3    is a cross section through a portion of one form of collar on the roll of Fig. 2;

Fig. 4    is similar to Fig. 3, but is of another form of collar on the roll of Fig. 2; and

Fig. 5    is similar to Fig. 3, but of a further form of collar on the roll of Fig. 2.

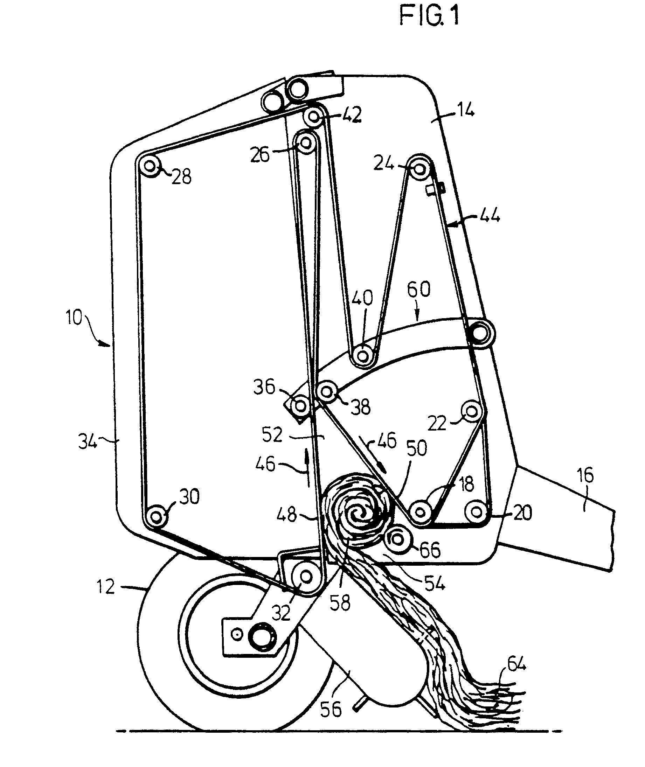

In Fig. 1 the machine includes a main frame 10 mounted on a pair of wheels 12. The main frame 10 has a pair of upright, opposite, fore-and-aft extending right and left side walls, of which the left hand wall 14 only is shown, connected by transverse beams (not shown). A draft tongue 16 is connected to a cross beam at the front of the frame 10 and extends forwardly for attaching the baler to a tractor (also not shown) which draws the machine.

A plurality of lateral rolls extends over the width of the machine. One set of rolls 18, 20, 22, 24, 26 is journalled in a forward fixed portion of either side wall, whilst a further set constituted by rolls 28, 30, 32 is journalled in a rearward swingable gate portion 34 of the side walls. There are also a pair of chamber restricting rolls 36, 38, and take-up and tensioning rolls 40, 42.

Six rubber belts 44 are trained side-by-side over the above rolls to provide the configuration shown and they move in the direction indicated by arrows 46. However alternate belts only are trained over the lower foremost roll 20, whilst the remaining belts by-pass the roll 20 and run directly between the roll 18, which is at the same horizontal level as the roll 20, and the roll 22 which is approximately vertically above the roll 20. This creates, as explained and claimed in our European patent application 82106409, a staggered array of belts affording the release of stray crop through gaps, formed as a result of the staggering, between neighbouring belts. Upwardly extending runs 48, 50 of the belts provide with the side walls a bale-forming chamber 52 which has an inlet 54 for hay received from a pick-up 56 beneath it.

In order to accommodate the increasing diameter of a growing bale core 58 in the bale-forming chamber 52, the size of the chamber must also increase and a belt take-up and tensioning mechanism 60 is provided for this purpose at either side of the machine. The mechanism 60 includes an arm carrying the rolls 36, 38, 40, but will not be described further as it is conventional.

In operation, hay lying in a windrow 64 is lifted and conveyed to the baling chamber 52 where the oppositely moving runs 48, 50 of the belts 44, aided by a stripper roll 66, cause the crop to turn clockwise (as viewed in Fig. 1) to form the bale core 58 of increasing size which eventually overcomes the tension in the belts brought about by the tensioning mechanisms, and the arm and the corresponding arm consequently swing upwardly, and thus the chamber 52 increases in size to accommodate as necessary the bale core 58 as its diameter grows. On completion of a bale the gate 34 is swung upwardly and the bale deposited on the ground.

During baling, liquid exuded from the crop tends to accumulate in a region between the belts 44 and the rolls driving them. In wet conditions clearly this difficulty will be exacerbated, and belt slippage may occur.

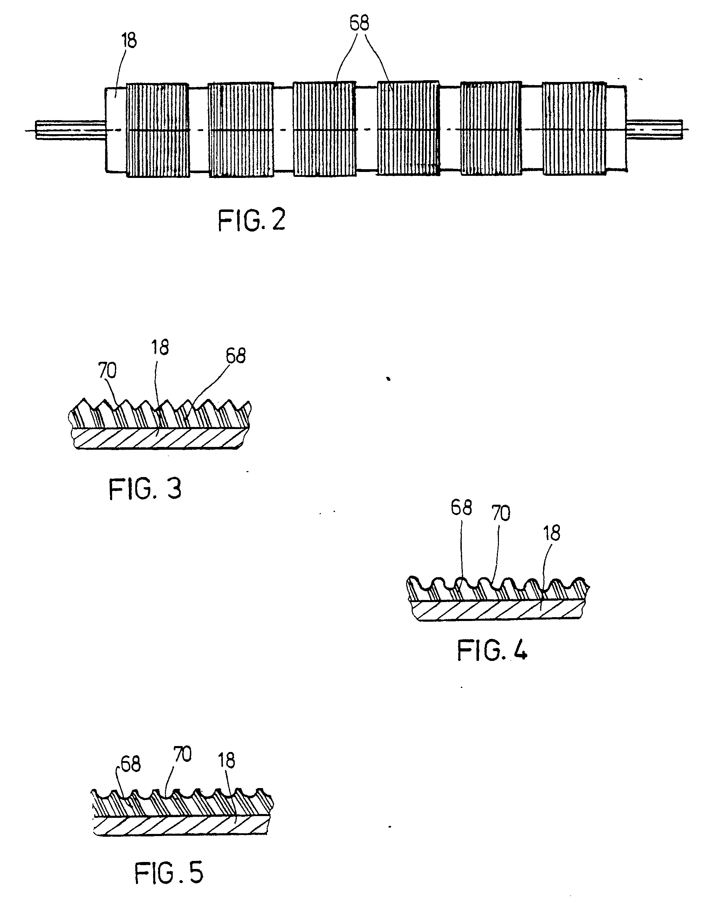

To reduce or overcome the problem, the rolls are each provided, as is the roll (arbitrarily roll 18) shown in Fig. 2, with six collars 68 arranged side-by-side and spaced apart along the length of the roll in a manner corresponding to the six belts 44 so that each belt is trained over an associated collar. The collars 68 are of rubber and have continuous grooves 70 which are in the form of rings. These grooves 70 can have various configurations as indicated in Figs. 3, 4 and 5 which show respectively grooves of V-shape giving a saw-tooth pattern in cross section, a shape giving a sinusoidal pattern, and a U-shape the arms of which converge toward the base of the "U".

The collars 68 are vulcanised directly onto their roll by one of two methods. The first comprises wrapping a band of raw rubber around the roll, heating the band to cause vulcanisation, and machining the now somewhat oversize collar on a lathe to the required shape and dimensions, the grooves being provided during the machining operation. The second comprises moulding the collar round the roll and then vulcanising. In the latter method the grooves are, of course, formed during the moulding. The mould can be a simple two-piece one.

There are 25 grooves per 100 mm length of collar. The pitch to depth ratio is 2, the pitch being 4 and the depth 2.

The optimum configuration of the grooves 70 varies with the type of rubber and the working conditions. If the surface area of the collars 68 which contacts the belts 44 is too small there can be excessive wear of the rubber. To avoid this the grooves 70 converge to their bases so that wear is slowed progressively as the contact area increases and an optimum contact area can be achieved in use. The ring form of the grooves 70 reduces entrapment of dirt and grass. If the grooves 70 are too far apart slippage is not adequately reduced, and if there are too many grooves 70 per 100 mm of collar length escape of liquid is inadequate.

## Claims

1. A baling machine for forming cylindrical bales of crop having: movable belts (44) arranged side-by-side across the machine to define a baling chamber (52); and drivable rolls (18, etc.) over which the belts (44) are trained characterised in that a plurality of side-by-side elastomeric collars (68) is disposed on a said roll or rolls (18, etc.), the collars (68) are in contact with the respective belts (44) and the collars (68) have continuous grooves (70) therein which are in the form of rings and which converge toward their bases, there being 10 to 200 grooves (70) per 100 mm length of collar (68).

2. A baling machine according to claim 1 characterised in that there are 50 to 100 grooves (70) per 100 mm length of collar (68).

3. A baling machine according to claim 1 or 2 characterised in that the depth of the grooves (70) is within the range 0.5 mm to 5 mm.

4. A baling machine according to any preceding claim characterised in that the pitch to depth ratio of the grooves (70) is less than 20.

5. A baling machine according to claim 4 characterised in that the pitch to depth ratio is in the range 2 to 10.

6. A baling machine according to any preceding claim characterised in that the collars (68) are of rubber vulcanised to the rolls (18, etc.)

7. A baling machine according to claim 6 characterised in that the collars (68) are of rubber moulded round the rolls (18, etc.)

8. A baling machine according to any preceding claim characterised in that the grooves (70) are V-shaped in cross section.

9. A baling machine according to any of claims 1 to 7 characterised in that the grooves (70) have a rounded base.

## Revendications

1. Machine de mise en balles servant à former des balles cylindriques d'une récolte et comportant des courroies mobiles (44) disposées côte-à-côte en travers de la machine de manière à définir une chambre de mise en balles (52), des rouleaux pouvant être entraînés (18,etc.), sur lesquels les courroies (44) sont entraînées, et une pluralité de manchons élastomères (68) disposés côte-à-côte sur l'un desdits rouleaux ou sur lesdits rouleaux (18,etc.), les manchons (68) étant en contact avec les courroies respectives (44), caractérisée en ce que les manchons (68) comportent des gorges continues (70), qui se présentent sous la forme d'anneaux et convergent en direction de leurs bases, 10 à 200 gorges (70) étant prévues pour 100 mm de longueur du manchon (68).

2. Machine de mise en balles selon la revendication 1, caractérisée en ce qu'il est prévu 50 à 100 gorges (70) pour 100 mm de longueur du manchon (68).

3. Machine de mise en balles selon la revendication 1 ou 2, caractérisée en ce que la profondeur des gorges (70) se situe dans la gamme comprise entre 0,5 mm et 5 mm.

4. Machine de mise en balles selon l'une quelconque des revendications précédentes, caractérisée en ce que le rapport du pas à la profondeur des gorges (70) est inférieur à 20.

5. Machine de mise en balles selon la revendication 4, caractérisée en ce que le rapport du pas à la profondeur est situé dans la gamme comprise entre 2 et 10.

6. Machine de mise en balles selon l'une quelconque des revendications précédentes, caractérisée en ce que les manchons (68) sont formés d'un caoutchouc fixé par vulcanisation sur les rouleaux (18, etc.).

7. Machine de mise en balles selon la revendication 6, caractérisée en ce que les manchons (68) sont formés d'un caoutchouc moulé autour des rouleaux (18, etc.).

8. Machine de mise en balles selon l'une quelconque des revendications précédentes, caractérisée en ce que les gorges (70) possèdent une forme en V en coupe transversale.

9. Machine de mise en balles selon l'une des revendications 1 à 7, caractérisée en ce que les gorges (70) possèdent une base arrondie.

## Ansprüche

1. Ballenpresse zum Bilden zylindrischer Ballen aus Erntegut mit beweglichen Riemen (44), die nebeneinander über die Maschinenbreite zum Definieren einer Ballenformkammer (52) angeordnet sind, antreibbaren Rollen (18 usw.), über die die Riemen (44) geführt sind, und einer Mehrzahl von aus elastischem Werkstoff bestehenden und nebeneinander auf einer Rolle oder den Rollen (18 usw.) angeordneten Ringen (68), die mit den jeweiligen Riemen (44) in Kontakt stehen, dadurch gekennzeichnet, daß die Ringe (68) kontinuierliche Rinnen (70) aufweisen, die ringförmig sind und zu ihren Basen hin konvergieren, und daß 10 bis 200 Rinnen (70) pro 100 mm Länge Ring (68) vorgesehen sind.

2. Ballenpresse nach Anspruch 1, dadurch gekennzeichnet, daß 50 bis 100 Rinnen (70) pro 100 mm Länge Ring (68) vorgesehen sind.

3. Ballenpresse nach Anspruch 1 oder 2, dadurch gekennzeichnet, daß die Tiefe der Rinnen (70) innerhalb des Bereiches von 0,5 mm bis 5 mm liegt.

4. Ballenpresse nach irgendeinem der vorstehenden Ansprüche, dadurch gekennzeichnet, daß das Verhältnis von Abstand zur Tiefe der Rinnen (70) kleiner als 20 ist.

5. Ballenpresse nach Anspruch 4, dadurch gekennzeichnet, daß das Verhältnis von Abstand zur Tiefe im Bereich zwischen 2 und 10 liegt.

6. Ballenpresse nach irgendeinem der voranstehenden Ansprüche, dadurch gekennzeichnet, daß die Ringe (68) aus Gummi bestehen, das auf die Rollen (18 usw.) aufvulkanisiert ist.

7. Ballenpresse nach Anspruch 6, dadurch gekennzeichnet, daß die Ringe (68) aus um die Rollen (18 usw.) gegossenem Gummi bestehen.

8. Ballenpresse nach irgendeinem der voranstehenden Ansprüche, dadurch gekennzeichnet, daß die Rinnen (70) einen V-förmigen Querschnitt aufweisen.

9. Ballenpresse nach irgendeinem der Ansprüche 1 bis 7, dadurch gekennzeichnet, daß die Rinnen (70) eine abgerundete Basis aufweisen.

FIG.1

FIG. 2

FIG. 3

FIG. 4

FIG. 5